# EUROPÄISCHE PATENTANMELDUNG

(11) **EP 0 975 114 A2**
(43) Veröffentlichungstag der Anmeldung: **26.01.2000**
(21) Anmeldenummer: 99440165.1
(22) Anmeldetag: 25.06.1999
(51) Int. Cl.: H04J 3/06

(54) **Synchronisationsverfahren, primärer Referenztaktgenerator und Netzelement für ein synchrones digitales Nachrichtenübertragungsnetz**

(30) Priorität: 18.07.1998 DE 19832440
(71) Anmelder: ALCATEL, 75008 Paris (FR)
(72) Erfinder: Wolf, Michael Dr., 74395 Mundelsheim (DE)
(74) Vertreter: Rausch, Gabriele, Dr.

(57) **Zusammenfassung**

Netzelemente (NE1, NE2) eines synchronen digitalen Nachrichtenübertragungsnetzes werden auf den Referenztakt eines primären Referenztaktgenerators synchronisiert. Um die Ausfallsicherheit des Netzes zu erhöhen, werden zwei primäre Referenztaktgeneratoren (PRC1, PRC2) verwendet. Im fehlerfreien Betrieb wird das erste Referenztaktsignal an die Netzelemente übertragen und zur Synchronisierung verwendet und das zweite Referenztaktsignal steht als Ersatzreferenztaktsignal zur Verfügung. Im Fehlerfall wird die Synchronisierung auf das zweite Referenztaktsignal umgeschaltet.

Das erfindungsgemäße Synchronisierungsverfahren sieht vor, daß zumindest eines der zwei Referenztaktsignale zur Unterscheidung der beiden Referenztaktsignale durch eine vorbestimmte Bitfolge im Kopfbereich von mit dem Referenztaktsignal erzeugten Nachrichtensignalen (STM-N) oder durch Beaufschlagen des Referenztaktsignales mit einer Phasenmodulation markiert wird. Dadurch ist gewährleistet, daß das Netz von einer einzigen Referenztaktquelle synchronisiert wird.

## Beschreibung

Die Erfindung betrifft ein Verfahren zur Synchronisation der Netzelemente eines synchronen digitalen Nachrichtenübertragungsnetzes nach dem Oberbegriff des Anspruchs 1, einen primären Referenztaktgenerator nach dem Oberbegriff des Anspruchs 8 und ein Netzelement für synchrones digitales Nachrichtenübertragungsnetz nach dem Oberbegriff des Anspruchs 9.

In einem synchronen digitalen Nachrichtenübertragungsnetz wie in einem SDH-System (SDH: sychronous digital hierarchie) oder in einem SONET-System (SONET: synchronous optical network) müssen alle Netzelemente auf einen hochgenauen Referenztakt synchronisiert sein. Idealerweise sind alle Netzelemente auf einen einzigen Referenztakt synchronisiert. Die Synchronisation erfolgt in solchen Nachrichtenübertragungsnetzen, indem aus einem empfangenen Nachrichtensignal ein Taktsignal abgeleitet, gefiltert und als Referenzfrequenz verwendet wird.

Aus dem Artikel "Aspekte der Netzsynchronisation" von T. Klett, Alcatel Telecom Rundschau, 1. Quartal 1997, S. 31-37 ist bekannt, die Netzelemente eines SDH-Systems nach einem hierarchischen Synchronisationsschema auf einen Referenztakt zu synchronisieren. Der Referenztakt wird von einem primären Referenztaktgenerator (PRC: primary reference clock) erzeugt. Um die Ausfallsicherheit des Netzes zu erhöhen, sind in dem SDH-System zwei primäre Referenztaktgeneratoren vorgesehen: einer als Synchronisationsreferenz und der andere als redundante Standby-Referenz. Eine Synchronisationsstatusmeldung gibt an, auf welche Taktqualität ein Netzelement synchronisiert ist. Es ist jedoch nicht möglich zu erkennen, auf welchen der zwei primären Taktgeneratoren ein Netzelement synchronisiert ist, da lediglich die Qualität, nicht aber die Herkunft des zur Synchonisation verwendeten Referenztaktes in der Synchronisationsstatusmeldung angegeben wird.

Eine Aufgabe der Erfindung ist es, ein Verfahren zur Synchronisation anzugeben, bei dem die Referenztakte unterschiedlicher primärer Referenztaktgeneratoren unterschieden werden können. Eine weitere Aufgabe der Erfindung ist, einen primären Referenztaktgenerator anzugeben, der in der Lage ist, einen von anderen unterscheidbaren Referenztakt zu erzeugen. Eine weitere Aufgabe der Erfindung ist, ein Netzelement anzugeben, das zwischen mehreren primären Referenztaktsignalen unterscheiden kann.

Die Aufgabe wird hinsichtlich des Verfahrens gelöst durch die Merkmale des Anspruchs 1, hinsichtlich des primären Referenztaktgenerators durch die Merkmale des Anspruchs 8 und hinsichtlich des Netzelementes durch die Merkmale des Anspruchs 9. Vorteilhafte Ausgestaltungen sind den abhängigen Ansprüchen zu entnehmen.

Ein Vorteil der Erfindung ist, daß Netze, die mit mehreren primären Taktgeneratoren ausgerüstet sind, auf einen einzigen Referenztakt synchronisiert werden können. Ein weiterer Vorteil ist, daß eine automatische Wiederherstellung der Synchronisation bei Ausfall einer Taktquelle ermöglicht wird, wobei die Gefahr der Bildung von Synchronisationsschleifen vermindert ist.

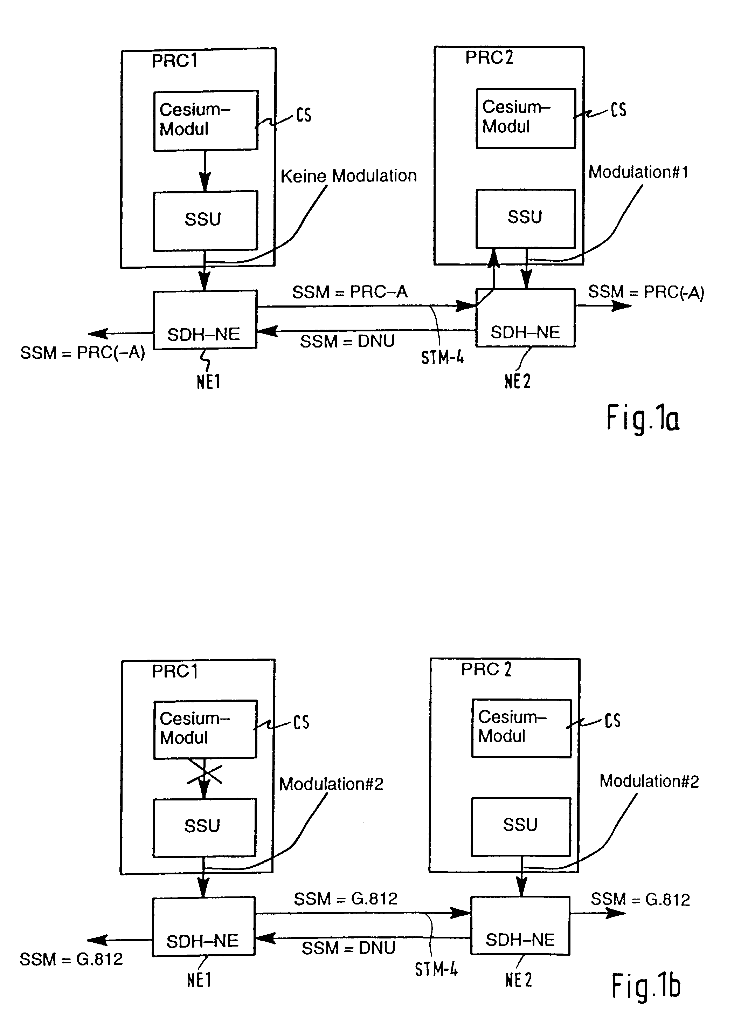

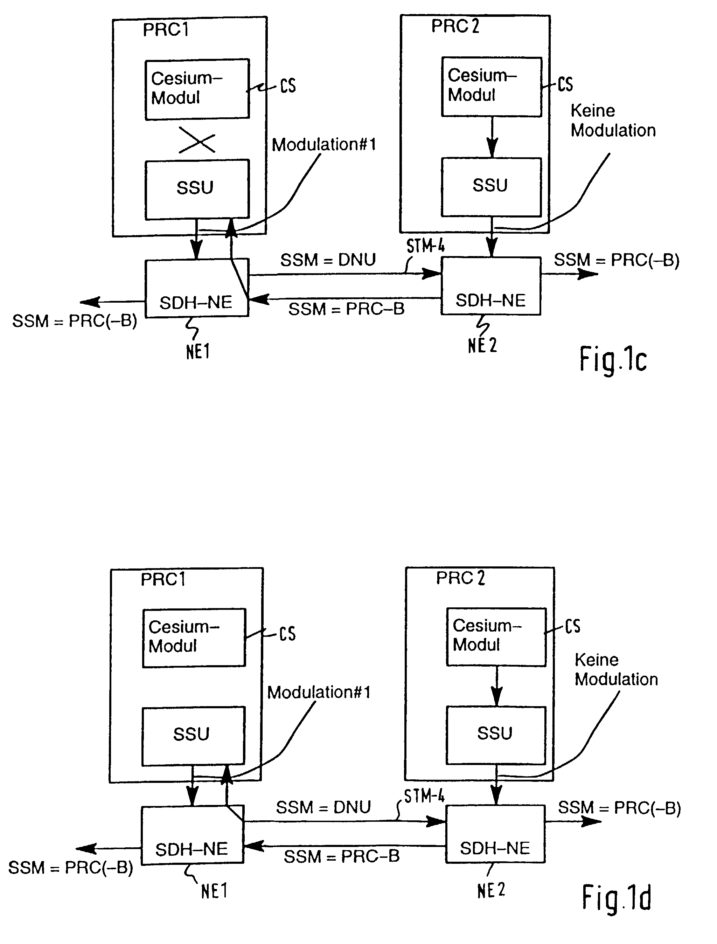

Im folgenden wird die Erfindung anhand der Figuren 1 a bis 4 in zwei Ausführungsbeispielen erläutert. Es zeigt:
- Figur 1a-d:: Ein Nachrichtenübertragungsnetz mit zwei primären Referenztaktgeneratoren in verschiedenen Synchronisationszuständen;
- Figur 2:: Das Zusammenspiel zwischen einem primären Referenztaktgenerator und einem Netzelement;
- Figur 3a,b:: Flußdiagramme des erfindungsgemäßen Synchronisationsverfahren und
- Figur 4: Ein zweites Ausführungsbeispiel der Erfindung.

Der Erfindung liegt die Erkenntnis zugrunde, daß es zur Vermeidung von Synchronisationsschleifen hilfreicht ist, die Herkunft des zur Synchronisation verwendeten Referenztaktes zu kennen. Daher wird erfindungsgemäß zumindest einer von zwei im Nachrichtenübertragungsnetz verfügbaren Referenztakte markiert. Das Markieren kann auf zwei verschiedene Arten erfolgen: Einem der Referenztakt kann eine charakteristische Phasenmodulation aufgeprägt werden oder Nachrichtensignale, die unter Verwendung eines der Referenztakte erzeugt wurden, erhalten im Kopfbereich (engl: overhead) eine Markierung, z.B. in Form einer erweiterten Synchronisationsstatusmeldung.

Die Phasenmodulation liegt dabei vorzugsweise innerhalb der Grenzen, die in dem Nachrichtenübertragungsnetz für Phasenschwankungen (Jitter) zulässig sind. Die Phasenmodulation übersteigt also die maximal zulässigen Grenzwerte für Phasenschwankungen nicht. Für SDH-Systeme sind diese Grenzwerte in den ITU-T Empfehlungen G.823, G.824 und G.825 festgelegt. Weiter ist vorteilhaft, wenn die Modulationsfrequenz oberhalb der Filterbandbreite der Netzelemente liegt. Dann ist im Nachrichtenübertragungsnetz keine Modulation zu sehen.

Im Folgenden wird zunächst ein erstes Ausführungsbeispiel der Erfindung erläutert. In den Figuren 1a bis 1d ist ein Nachrichtenübertragungsnetz schematisch dargestellt. Es enthält zwei miteinander verbundene Netzelemente NE1, NE2 und zwei primäre Referenztaktgeneratoren PRC1, PRC2, die jeweils mit einem der Netzelemente verbunden sind. Das Nachrichtenübertragungsnetz ist ein SDH-System. Die Netzelemente tauschen Nachrichtensignale in Form synchroner Transportmodule STM-N aus. N kann 1, 4, 16 oder ein Vielfaches davon sein. Das Nachrichtenübertragungsnetz kann weitere Netzelemente enthalten, die mit den Netzelementen NE1, NE2 verbunden sind. Dies ist in den Figuren 1a bis 1d durch seitliche Pfeile an den Netzelementen angedeutet.

Die beiden primären Referenztaktgeneratoren PRC1 und PRC2 besitzen jeweils ein Cäsiummodul und ein Taktmodul SSU. Das Cäsiummodul liefert ein Signal mit einer hochgenauen Standardfrequenz, auf den das Taktmodul SSU synchronisiert werden kann. Anstelle des Cäsiummoduls ist auch ein GPS-Empfänger (GPS: global positioning system) denkbar, wie er in dem eingangs genannten Artikel von T. Klett beschrieben ist. Bei der Verbindung zwischen primärem Referenztaktgenerator und Netzelement handelt es sich um eine Taktschnittstelle, z.B. eine 2MHz-Schnittstelle. Alternativ ist hier auch eine 2MBit-Schnittstelle möglich, so daß in dem Taktsignal eine Synchronisationsstatusmeldung enthalten sein kann.

Die primären Referenztaktgeneratoren PRC1 und PRC2 verfügen erfindungsgemäß über Mittel zum Markieren des Referenztaktsignals am Ausgang. Im ersten Ausführungsbeispiel ist dieses Mittel jeweils ein Phasenmodulator, mit dem das Referenztaktsignal in der Phase moduliert werden kann. Der Phasenmodulator ist in dem Taktmodul SSU enthalten.

Die Nachrichtensignale, die zwischen den Netzelementen NE1, NE2 ausgetauscht werden, enthalten eine erweiterte Synchronisationsstatusmeldung. Die Synchronisationsstatusmeldung setzt sich aus der in "Aspekte der Netzsynchronisation" von T. Klett, Alcatel Telecom Rundschau, 1. Quartal 1997, S. 31-37, beschriebenen Synchronisationsstatusmeldung und einem weiteren Bit des S1-Bytes zusammen. Das S1-Byte ist Bestandteil des Kopfbereichs der synchronen Transportmodule. In dem weiteren Bit ist die Information über die Referenztaktquelle codiert, auf die das sendende Netzelement synchronisiert ist. Durch die erweiterte Synchronisationsstatusmeldung wird erreicht, daß alle Netzelemente im Nachrichtenübertragungsnetz auf dieselbe primäre Referenztaktquelle synchronisiert werden können.

Alternativ können auch bislang ungenutzte Bitfolgen in den Bits 5-8 des S1 -Bytes für die Codierung der Referenztaktquelle genutzt werden. Die Bits 5-8 sind bislang für die Synchronisationsstatusmeldung SSM festgelegt. Jedoch hat die Verwendung einer um ein weiteres Bit erweiterten Synchronisationsstatusmeldung den Vorteil, daß herkömmliche Netzelemente, die nur die bislang genutzten Bits 5-8 für den Synchronisationsstatus interpretieren und die Erkennung der Referenztaktquelle nicht unterstützen, ohne Einschränkung weiter betrieben werden können.

In dem ersten Ausführungsbeispiel werden zwei erweiterte Synchronisationsstatusmeldungen SSM zur Markierung von mit Referentaktsignalen erzeugten Nachrichtensignalen verwendet:
- SSM 1 0010: Referenztakt stammt vom ersten primären Referenztaktgenerator PRC1 und
- SSM 0 0010: Referenztakt stammt vom zweiten primären Referenztakltgenerator PRC2.

Zusätzlich werden zwei verschiedene charakteristische Phasenmodulationsmuster verwendet. Dabei bedeuten:
- Keine Phasenmodulation: Primärer Referentaktgenerator ist auf internes Cäsiummodul synchronisiert;
- Phasenmodulationsmuster Nr.1: Primärer Referentaktgenerator ist auf externes Referentaktsignal synchronisiert und
- Phasenmodulationsmuster Nr.2: Primärer Referentaktgenerator ist nicht synchronisiert (Fehlerfall).

Die Netzelemente NE1, NE2 verfügen jeweils über einen internen Taktgenerator. Dieser muß auf einen Referenztakt synchronisiert werden.

Die Netzelemente leiten von empfangenen Nachrichtensignalen ein Taktsignal ab, welches als Referenztakt für die interne Synchronisation dienen kann. Da die Netzelemente NE1, NE2 jedoch mit einem primären Referenztaktgenerator PRC1, PRC2 verbunden sind, verwenden sie dessen Referenztaktsignal. Die primären Referenztaktgeneratoren sind ebenfalls auf ein externes Referenztaktsignal synchronisierbar. Zu diesem Zweck, sind die Netzelemente NE1, NE2 so ausgelegt, daß sie ein von einem empfangenen Nachrichtensignal abgeleitetes Taktsignal mit dessen Markierung an die angeschlossenen primären Referenztaktgeneratoren PRC1, PRC2 weiterleiten können.

In Figur 1a ist gezeigt, daß die beiden Netzelemente auf den ersten primären Referenztaktgenerator PRC1 synchronisiert sind. Der zweite primäre Referenztaktgenerator PRC2 ist ebenfalls auf den ersten primären Referenztaktgenerator PRC1 synchronisiert. Der erste primäre Referenztaktgenerator PRC1 ist auf sein internes Cäsiummodul synchronisiert. Er sendet an seinem Taktausgang ein 2MHz-Taktsignal an das Netzelement NE1. Dieses Taktsignal enthält keine Phasenmodulation. Dem Netzelement NE1 ist deshalb bekannt, daß der erste primäre Referenztaktgenerator PRC1 auf die interne Standardfrequenz seines Cäsiummoduls synchronisiert ist.

Nachrichtensignale, die von dem Netzelement NE1 gesendet werden, enthalten in Kopfbereich eine erweiterte Synchronisationsstatusmeldung, die besagt, daß die Taktqualität die eines primären Referenztaktgenerators ist und daß die Referenztaktquelle der erste primäre Referenztaktgenerator PRC1 ist. Dazu werden die Bits 4-8 des S1-Bytes auf den Wert 1 0010 gesetzt. Das Netzelement NE2 empfängt von dem Netzelement NE1 gesendete Nachrichtensignale, decodiert die darin enthaltene erweiterte Synchronisationsstatusmeldung und leitet von den empfangenen Nachrichtensignalen ein Taktsignal ab. Dieses Taktsignal wird mit dem Phasenmodulationsmuster Nr. 1 moduliert über die Taktschnittstelle an den zweiten primären Referenztaktgenerator PRC2 weitergeleitet. Dadurch wird angezeigt, daß es sich um den Referenztakt des Referenztaktgenerators PRC1 handelt.

Der zweite primäre Referenztaktgenerator PRC2 weiß aufgrund des Phasenmodulationsmusters, daß es sich um ein Referenztaktsignal eines anderen, auf sein internes Cäsiummodul synchronisierten primärenen Referenztaktgenerators handelt. Somit synchronisiert der zweite primäre Referenztaktgenerator PRC2 sein internes Taktmodul SSU auf das empfangene Taktsignal. Um diesen Umstand anzuzeigen moduliert er das Taktsignal an seinem Taktausgang mit dem Modulationsmuster Nr.1.

Das Netzelement NE2 empfängt an seinem Takteingang das mit dem Phasenmodulationsmuster Nr.1 modulierte Referenztaktsignal des primären Referentaktgenerators PRC2 und synchronisiert seinen interen Taktgenerator auf dieses Taktsignal. Aufgrund des Phasenmodulationsmusters weiß das Netzelement NE2, daß es sich um einen Referenztakt handelt, der vom ersten primären Refernztaktgenerator PRC1 stammt. Diesen Umstand meldet es in der Synchronisationsstatusmeldung in allen zu sendenen Nachrichtensignal an andere Netzelemente weiter. An das Netzelement NE1, von dem der zur Synchronisierung verwendete Takt stammt, wird in Rückrichtung die Synchronisationsstatusmeldung 1111 mit der Bedeutung DNU ("do not use for synchronization") gesendet, um die Entstehung von Synchronisationsschleifen zu vermeiden. Auf diese Weise ist es möglich, alle Netzelemente des Nachrichtenübertragungsnetzes auf eine einzige Referenztaktquelle zu synchronisieren.

In Figur 1b ist ein Fehlerfall dargestellt: Das Cäsiummodul des ersten primären Referenztaktgenerators PRC1 ist ausgefallen. In der Figur ist dies dargestellt, indem die interne Verbindung zwischen Cäsiummodul CS und Taktmodul SSU durchgestrichen ist. Das Taktmodul SSU des ersten primären Referenztaktgenerators PRC1 wird daher nicht mehr synchronisiert und läuft im freien Betrieb mit der niedrigeren Qualität G.812 weiter. Diesem Umstand trägt der erste primäre Referenztaktgenerator PRC1 Rechnung, indem er dem Taktsignal an seinem Ausgang das Phasenmodulationsmuster Nr. 2 aufprägt. Das Netzelement NE1, welches ja auf den ersten primären Referenztaktgenerator PRC1 synchronisiert ist, meldet in der Synchronisationsstatusmeldung aller ausgehender Nachrichtensignale die niedrigere Taktqualität G.812 weiter. Der zweite primäre Referenztaktgenerator PRC2 erhält nun kein Taktsignal mit ausreichender Qualität mehr, auf das er sein Taktmodul SSU synchronisieren könnte. Folglich wird auch dessen Taktmodul nicht mehr synchronisiert und läuft im freien Betrieb mit der Qualität G.812 weiter. Diesen Umstand meldet der zweite primäre Referenztaktgenerator PRC2 ebenfalls durch die Verwendung des Phasenmodulationsmusters Nr. 2.

In Figur 1c ist nun dargestellt, wie in dem Nachrichtenübertragungsnetz auf eine Ersatzsynchronisierung umgeschaltet wird. Der zweite primäre Referenztaktgenerator PRC2 wählt, da er an seinem Takteingang kein Taktsignal mit ausreichender Qualität mehr empfängt, sein internes Cäsiummodul aus, um sein Taktmodul SSU zu synchronisieren. Er liefert an seinem Taktausgang daher wieder ein Taktsignal mit der hohen Qualität G.811. Den Umstand, daß die Synchronisation auf das interne Cäsiummodul erfolgt, meldet der zweite primäre Referenztaktgenerator PRC2 weiter, indem er dem Taktsignal keine Phasenmodulation aufprägt. Das Netzelement NE2, das auf das Referenztaktsignal des zweiten primären Referenztaktgenerators PRC2 synchronisiert ist, ist nun ebenfalls wieder mit der hohen Qualität G.811 synchronisiert und meldet diesen aktuellen Synchronisationszustand an alle angeschlossenen Netzelemente des Nachrichtenübertragungsnetzes weiter. Dazu verwendet es die erweiterte Synchronisationsstatusmeldung 0 0010, welche aussagt, daß der Referenztakt, mit dem gesendete Nachrichtensignale erzeugt wurden, von dem zweiten primären Referenztaktgenerator stammt.

Das Netzelement NE1 leitet von Nachrichtensignalen, die von dem Netzelement NE2 stammen, ein Taktsignal ab und leitet dieses an den primären Referenztaktgenerator PRC1 weiter, der wiederum sein Taktmodul auf dieses synchronisiert. Er hat damit ebenfalls wieder die hohe Taktqaulität G.81 1. Sein Ausgangstaktsignal moduliert der primäre Referenztaktgenerator PRC1 mit dem Phasenmodulationsmuster Nr. 1, da er auf eine externe Taktquelle, nämlich den Takt des primären Referenztaktgenerators PRC2 synchronisiert ist. Das Netzelement NE1 weiß aufgrund des Phasenmodulationsmusters, daß es in allen auszusendenden Nachrichtensignalen die erweiterte Synchronisationsstatusmeldung 0 0010 versenden muß, die besagt, daß der zur Erzeugung der Nachrichtensignale verwendete Takt von dem zweiten primären Referenztaktgenerator PRC2 stammt. Lediglich in Rückrichtung zum Netzelement NE2 sendet es die Synchronisationsstatusmeldung 1111 mit der Bedeutung DNU um die Bildung von Synchronisationsschleifen zu vermeiden.

In Figur 1d ist dargestellt, daß der Fehler im ersten primären Referenztaktgenerator wieder beseitigt ist und das Cäsiummodul wieder einwandfrei arbeitet. Die Synchronisation wird jedoch nicht auf den in Figur 1a abgebildeten Zustand zurückgesetzt, da die beiden Referenztaktgeneratoren PRC1 und PRC2 gleichberechtigt sind. Der Referenztaktgenerator PRC1 steht in dem Nachrichtenübertragungsnetz somit nun als Ersatzsynchronisationsquelle (Standby-Referenz) zur Verfügung.

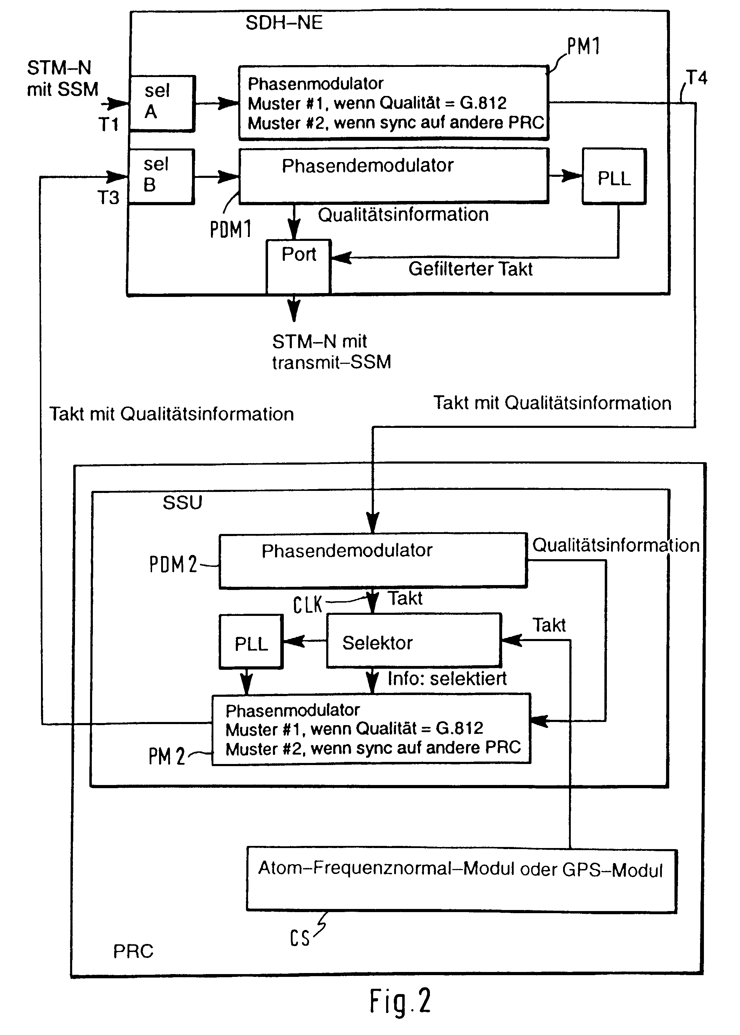

In Figur 2 ist das Zusammenspiel zwischen einem primärem Referenztaktgenerator PRC und einem Netzelement NE dargestellt. Das Netzelement NE hat einen Eingang T1, an dem Nachrichtensignale aus dem Nachrichtenübertragungsnetz empfangen werden. In dem Schnittstellenmodul A des Eingangs T1 wird ein Taktsignal CLK aus empfangenen Nachrichtensignalen abgeleitet und die Synchronisationsstatusmeldung SSM der Nachrichtensignale STM-N (N=1, 4, 16 oder ein Vielfaches davon) gelesen. Beide, abgeleitetes Taktsignal CLK und Synchronisationsstatusmeldung SSM, werden an einen nachgeschalteten Phasenmodulator PM1 weitergeleitet. Der Phasenmodulator prägt dem abgeleiteten Taktsignal CLK das Phasenmodulationsmuster Nr. 1 auf, wenn das Taktsignal laut der Synchronisationsstatusmeldung die hohe Taktqualität G.811 hat und von einem anderen primären Referenztaktgenerator stammt. Im Fehlerfall prägt der Phasenmodulator PM1 dem Taktsignal CLK das Phasenmodulationsmuster Nr. 2 auf. Das phasenmodulierte Taktsignal wird über die Taktschnittstelle T4 an den angeschlossenen primären Referenztaktgenerator PRC gesendet.

Über einen Takteingang T3 empfängt das Netzelement NE ein Referenztaktsignal von dem angeschlossenen primären Referenztaktgenerator PRC. Dieses Referenztaktsignal wird über ein Schnittstellenmodul B einem Phasendemodulator PDM1 zugeleitet. Der Phasendemodulator erkennt ein aufgeprägtes Phasenmodulationsmuster und filtert dieses vorzugsweise heraus. Das gefilterte Referenztaktsignal wird dann an einen internen Taktgenerator PLL des Netzelementes NE weitergeleitet und synchronisiert diesen. Bei dem internen Taktgenerator PLL handelt es sich um eine übliche Phasenregelschleife mit Tiefpaßcharakteristik, die aus einem abstimmbarem Quarzoszillator und einem Phasenkomparator, der den Quarzoszillator abstimmt, besteht. Der interne Taktgenerator PLL dient hauptsächlich dazu, das Referenztaktsignal zu filtern und bei kurzfristigem Ausfall des Referenztaktsignales die Taktversorgung des Netzelementes aufrecht zu erhalten. Sein Ausgangstaktsignal wird an ein Ausgangsmodul Port weitergeleitet. In dem Ausgangsmodul Port wird mit dem Ausgangstaktsignal des internen Taktgenerators ein zu sendendes Nachtrichtensignal gebildet. Über eine Verbindung zu dem Phasendemodulator PDM1 wird eine Information über die Taktqualität und -herkunft übertragen, die aus dem vom Phasendemodulator erkannten Phasenmodulationsmuster stammt. Diese Information bestimmt, welche Synchronisationsstatusmeldung SSM in den Nachrichtensignalen gesendet wird.

Der mit dem Netzelement NE verbundene primäre Taktgenerator PRC hat einen Eingang, an dem er das vom Netzelement NE abgeleitete und mit einem Phasenmodulationsmuster versehene Taktsignal empfängt und einen Ausgang, an dem er sein Referenztaktsignal an das Netzelement sendet. Das am Eingang empfangene Taktsignal wird einem Phasendemodulator PDM2 zugeleitet, der das aufgeprägte Phasenmodulationsmuster erkennt und als Qualitätsinformation an einen Phasenmodulator PM2 weiterleitet. Von dem Phasendemodulator PDM2 gelangt das Taktsignal zu einer Auswahleinrichtung Selektor. Die Auswahleinrichtung erhält neben dem empfangenen Taktsignal auch ein Signal mit Standardfrequenz von einem Cäsiummodul CS (oder GPS-Modul). Die Auswahleinrichtung wählt eines der beiden Signale aus und teilt die Auswahl dem Phasenmodulator PM2 mit. Das ausgewählte Signal wird an ein Taktmodul SSU weitergeleitet. Das Taktmodul ist eine Phasenregelschleife, die im freien, unsynchronisierten Betrieb ein Ausgangstaktsignal mit der Taktqualität G.812 liefert. Das Taktmodul SSU wird auf das ausgewählte Signal synchronisiert. Das Ausgangstaktsignal des Taktmoduls wird an den Phasenmodulator PM2 geleitet.

Der Phasenmodulator PM2 prägt dem Ausgangstaktsignal des Taktmoduls SSU ein charakteristisches Phasenmodulationsmuster auf, das von der Qualitätsinformation des Phasendemodulators PDM und der Information über das von der Auswahleinrichtung Selektor ausgewählte Signal abhängt. Folgende Phasenmodulationsmuster werden verwendet:
- Keine Phasenmodulation, wenn der primäre Referentaktgenerator PRC auf sein internes Cäsiummodul synchronisiert ist;
- Phasenmodulationsmuster Nr.1, wenn der primäre Referentaktgenerator PRC auf ein externes Referentaktsignal mit der Qualität G.811 synchronisiert ist und
- Phasenmodulationsmuster Nr.2, wenn der primäre Referentaktgenerator PRC nicht synchronisiert ist (Fehlerfall).

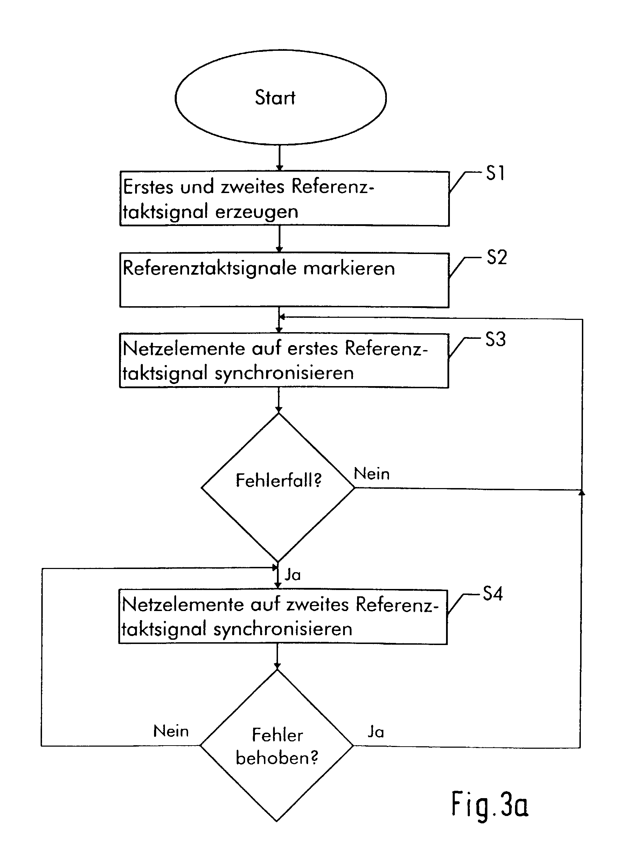

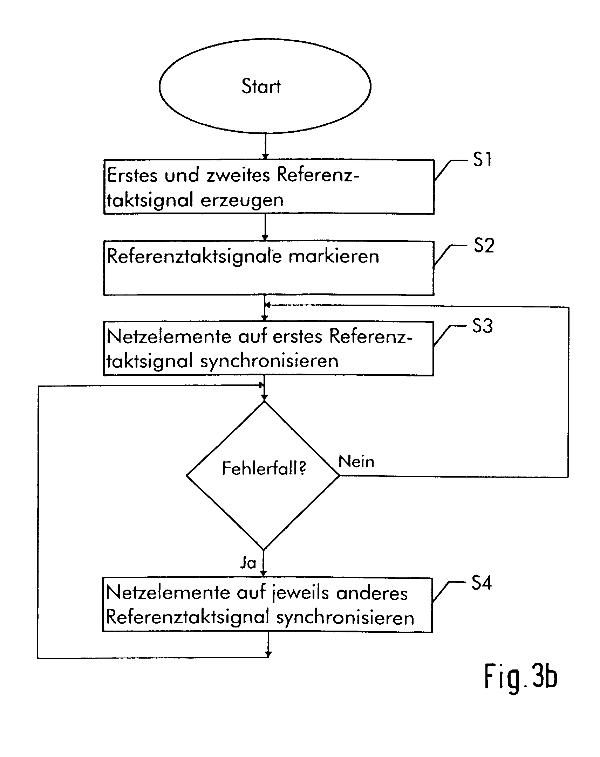

Das in den Figuren 3a und b als Flußdiagramm gezeigte Synchronisierverfahren hat die folgenden Schritte:
- Schritt S1 :: Von dem ersten und dem zweiten primären Referenztaktgenerator werden ein erstes und ein zweites Referenztaktsignal erzeugt.
- Schritt S2:: Zumindest eines der beiden Referenztaktsignale wird entsprechend dessen Herkunft markiert. Die Markierung ist entweder eine Phasenmodulation, die dem Referenztaktsignal aufgeprägt wird, oder eine erweiterte Synchronisationsstatusmeldung, die im Kopfbereich von mit dem Referenztaktsignal erzeugten Nachrichtensignalen übertragen wird. Phasenmodulation wird zwischen dem primären Referenztaktgenerator und einem Netzelement verwendet, die erweiterte Synchronisationsstatusmeldung zwischen Netzelementen untereinander.
- Schritt S3:: Die Netzelemente werden auf das erste Referenztaktsignal synchronisiert. Das zweite Referenztaktsignal steht an zumindest einem Netzelement als Standby-Referenz für eine Ersatzsynchronisierung zur Verfügung. Die Auswahl des zur Synchronisierung verwendeten Referenztaktsignals erfolgt aufgrund der Markierung. Hat sich ein Netzelement auf eines der beiden Referenztaktsignale synchronisiert, so überträgt es in allen zu sendenden Nachrichtensignalen im Kopfbereich eine erweiterte Synchronisationsstatusmeldung, die Taktqualität und Herkunft des Referenztaktsignales angibt. Lediglich in Rückrichtung zu dem Netzelement, von dem das zur Synchronisierung verwendete Referenztaktsignal stammt wird die Synchronisationsstatusmeldung DNU gesendet.
In jedem Netzelement findet eine Prüfung statt, ob der zur Synchronisierung verwendete Referenztakt fehlerfrei empfangen wird oder ob er gestört ist. Liegt kein Fehlerfall vor, so synchronisiert sich das betreffende Netzelement weiter in Schritt S3 auf das bislang verwendete Referenztaktsignal. Anderenfalls wird mit Schritt S4 fortgefahren.
- Schritt S4:: Detektiert ein Netzelement einen Fehlerfall, so schaltet es auf Ersatzsynchronisierung um. Ein Fehlerfall kann bedeuten, daß der erste primäre Referenztaktgenerator ausgefallen ist. In diesem Fall geht der interne Taktgenerator des Netzelementes, welches den Fehler zuerst detektiert, in den freien, unsynchronisierten Betrieb. In der Synchronisationsstatusmeldung wird den anderen Netzelementen eine entsprechend niedrigere Taktqualität angezeigt. Der zweite primäre Taktgenerator und das an den zweiten primären Taktgenerator angeschlossene Netzelement schalten nun ihre Synchronisierung auf den zweiten Referenztakt um und signalisieren den angeschlossenen Netzelementen die hohe Taktqualität und die Herkunft des zweiten Refenztaktes durch eine entspechende Markierung.

Wenn der Fehlerfall beseitigt wurde kann entweder der ursprüngliche Synchronisationszustand wieder hergestellt werden, so daß das erste Referenztaktsignal zur Synchronisierung dient und das zweite für Ersatzsynchronisierung zur Verfügung steht, oder die Rollen von erstem und zweitem Referenztaktsignal bleiben vertauscht, so daß dann das erste Referenztaktsignal für Ersatzsynchronisierung zur Verfügung steht. Die erste Variante wird als revertives Verhalten bezeichnet und läßt sich Zuordnung von Prioritäten zu den primären Referenztaktgeneratoren und zu den Takteingängen der Netzelemente erzielen. Das Verfahren bei revertivem Verhalten ist in Figur 3a gezeigt. Ein spezielles Startverhalten ist hierbei nicht erforderlich. Die zweite Variante wird als nicht revertives Verhalten bezeichnet. Dies zeigt Figur 3b. Hierbei ist ein weiterer Schritt vorteilhaft, um das Startverhalten des Systems zuverlässig zu gestalten: Wenn ein primärer Referenztaktgenerator bei einem Systemstart an seinem Takteingang ein externes Referenztaktsignal empfängt, so wartet er eine vorbestimmte Wartezeit ab, bevor er sich auf den externen Referenztakt synchronisiert. Die Wartezeit der beiden primären Referenztaktgeneratoren ist dabei unterschiedlich lang zu wählen. Dadurch wird erreicht, daß bei einem Systemstart ein definierter Synchronisationszustand herbeigeführt wird.

Der primäre Referenztaktgenerator des ersten Ausführungsbeispieles kann ebenfalls als Netzelement betrachtet werden, da er die Fähigkeit besitzt, sich auf einen externen Takt zu synchronisieren. Bei einer alternativen Ausführungsform eines erfindungsgemäßen Netzelementes ist der primäre Referenztaktgenerator in dem Netzelement integriert.

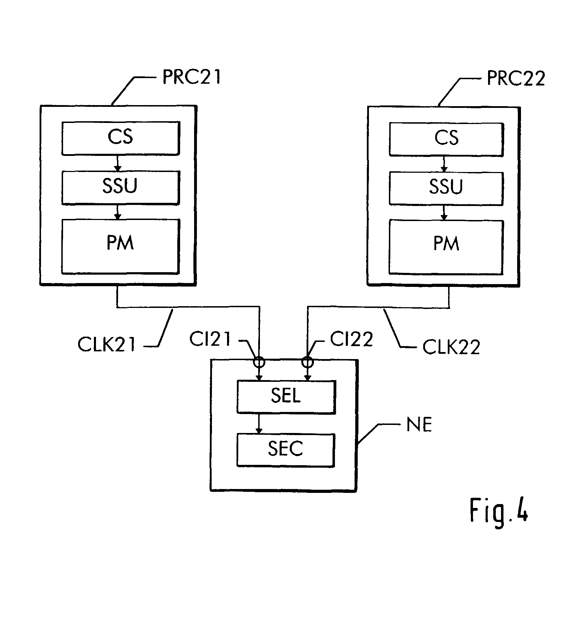

Es folgt eine Erläuterung eines zweiten, in Figur 4 dargestellten Ausführungsbeispiels der Erfindung. Ein Netzelement NE empfängt an zwei Takteingängen CI21, CI22 je ein Taktsignal CLK21, CLK22. Die beiden Taktsignale CLK21, CLK22 stammen jeweils von einem primären Referenztaktgenerator PRC21, PRC22. Jeder der beiden Referenztaktgeneratoren verfügt über ein Cäsiummodul CS zur Erzeugung einer Standardfrequenz, ein internes Taktmodul SSU, welches auf die Standardfrequenz synchronisiert ist, und einen Phasenmodulator PM. Der Phasenmodulator prägt dem Taktsignal, welches von dem Taktmodul jeweils erzeugt wird, als Markierung ein Phasenmodulationsmuster auf, das für den primären Taktgenerator charakteristisch ist. Die Taktsignale der beiden primären Referenztaktgeneratoren werden über ein nicht dargestelltes Nachrichtenübertragungsnetz zu dem Netzelement NE übertragen.

In dem Netzelement werden die beiden empfangenen Taktsignale einer Auswahleinrichtung (Selektor) SEL zugeführt, die anhand der Markierung eines der beiden Taktsignale zur internen Synchronisation auswählt. Das ausgewählte Taktsignal wird von der Auswahleinrichtung einem internen Taktgenerator SEC zugeleitet, der sich daraufhin auf das ausgewählte Taktsignal synchronisiert.

Die Erfindung wurde anhand der Ausführungsbeispiele für die Verwendung von zwei primären Referenztaktgeneratoren beschrieben, ist jedoch nicht darauf beschränkt. Vielmehr können auch mehr als zwei primäre Referenztaktgeneratoren in dem Nachrichtenübertragungsnetz verwendet werden, so daß mehrere primäre Referenzatktgeneratoren für Ersatzsynchronisation zur Verfügung stehen. In diesem Fall können entweder weitere verschiedene Phasenmodulationsmuster und erweiterte Synchronisationsstatusmeldungen verwendet werden, um alle Referenztaktsignale zu unterscheiden, oder es können gleiche Markierungen für verscheidene Takte verwendet werden. Bei der zweiten Ausführungsform erfolgt die Unterscheidung der Referenztakte dann zusätzlich mit der Information, aus welcher Richtung oder an welchem Eingang ein Nachrichten- oder Taktsignal empfangen wird.

## Patentansprüche

1. Verfahren zum Synchronisieren von Netzelementen (NE1, NE2; NE) eines synchronen digitalen Nachrichtenübertragungsnetzes, bei dem von einem ersten (PRC1) und einem zweiten primären Referenztaktgenerator (PRC2) ein erstes und ein zweites Referenztaktsignal erzeugt wird, bei dem im fehlerfreien Betrieb das erste Referenztaktsignal an die Netzelemente übertragen und zur Synchronisierung verwendet wird und das zweite Referenztaktsignal als Ersatzreferenztaktsignal zur Verfügung steht und bei dem im Fehlerfall die Synchronisierung auf das zweite Referenztaktsignal umgeschaltet wird,
**dadurch gekennzeichnet**,daß
zumindest eines der zwei Referenztaktsignale zur Unterscheidung der beiden Referenztaktsignale durch eine vorbestimmte Bitfolge (SSM) im Kopfbereich von mit dem Referenztaktsignal erzeugten Nachrichtensignalen (STM-N) oder durch Beaufschlagen des Referenztaktsignales mit einer Phasenmodulation markiert wird.

2. Verfahren nach Anspruch 1, bei dem eines der Referenztaktsignale durch eine vorbestimmte Bitfolge im Kopfbereich von mit dem Referenztaktsignal erzeugten Nachrichtensignalen markiert wird und bei dem die vorbestimmte Bitfolge eine Synchronisationsstatusmeldung (SSM) ist.

3. Verfahren nach Anspruch 2, bei dem eines der Referenztaktsignale durch eine vorbestimmte Bitfolge im Kopfbereich von mit dem Referenztaktsignal erzeugten Nachrichtensignalen markiert wird und bei dem die vorbestimmte Bitfolge die Bits 5 bis 8 sowie ein weiteres Bit des S1-Bytes des Kopfbereichs belegt.

4. Verfahren nach Anspruch 1, bei dem eines der Referenztaktsignale durch Beaufschlagen mit einer Phasenmodulation markiert wird und die Phasenmodulation ein charakteristisches Phasenmodulationsmuster aufweist.

5. Verfahren nach Anspruch 1, bei dem aufgrund der Markierung die folgenden drei Synchronisationszustände unterschieden werden:
- Synchronisation erfolgt auf den ersten primären Referenztaktgenerator,
- Synchronisation erfolgt auf den zweiten primären Referenztaktgenerator und
- Synchronisation erfolgt auf keinen der beiden Referenztaktgeneratoren.

6. Verfahren nach Anspruch 1, bei dem mit dem Referenztaktsignal erzeugte Nachrichtensignale, die zwischen den Netzelementen übertragen werden, durch eine vorbestimmte Bitfolge im Kopfbereich markiert werden und bei dem zumindest ein zwischen einem der zwei primären Referenztaktgeneratoren und einem der Netzelemente übertragenes Referenztaktsignal durch eine Phasenmodulation markiert wird.

7. Verfahren nach Anspruch 1, bei dem die Phasenmodulation innerhalb der in dem Nachrichtenübertragungsnetz maximal zulässigen Grenzwerte für Phasenschwankungen liegt.

8. Primärer Taktgenerator (PRC) zur Erzeugung eines Referenztaktsignal, welches zur Synchronisierung von Netzelementen (NE) eines synchronen digitalen Nachrichtenübertragungsnetzes verwendbar ist,
**gekennzeichnet durch**
Mittel (PM2) zum Markieren des Referenztaktsignales entweder durch eine vorbestimmte Bitfolge im Kopfbereich von mit dem Referenztaktsignal erzeugten Nachrichtensignalen oder durch Beaufschlagen des Referenztaktsignales mit einer Phasenmodulation.

9. Netzelement (NE1, NE2) für ein synchrones digitales Nachrichtenübertragungsnetz mit zwei Eingängen an denen ein erstes und ein zweites Referenztaktsignal empfangbar sind und mit Mitteln zur Synchronisierung eines internen Taktgenerators mit einem der beiden Referenztaktsignale,
**gekennzeichnet durch**
Mittel (PDM1) zum Erkennen einer Markierung von zumindest einem der beiden Referenztakte in Form einer vorbestimmten Bitfolge im Kopfbereich von mit dem Referenztaktsignal erzeugten Nachrichtensignalen oder in Form einer Phasenmodulation und durch Mittel zum Auswählen des zur Synchronisierung verwendeten Referenztaktsignales aufgrund der Markierung.

10. Netzelement nach Anspruch 9 mit Mitteln zum Weiterleiten der Markierung des zur Synchronisation verwendeten Referenztaktsignales als Teil von zu sendenden Ausgangssignalen.
